# FASCICULE DE BREVET EUROPEEN

(11) **EP 2 392 838 B1**
(45) Date de publication et mention de la délivrance du brevet: **31.07.2013**
(21) Numéro de dépôt: 11168358.7
(22) Date de dépôt: 01.06.2011
(51) Int. Cl.: F16H 59/04, A63F 13/06, G05G 9/00

(54) **contrôleur de vitesses à mode séquentiel et mode manuel pour jeu vidéo**
Sequentielle und manuelle Geschwindigkeitskontrollvorrichtung für Video-Game
Gear controller with sequential mode and manual mode for video game

(30) Priorité: 03.06.2010 FR 1054379
(43) Date de publication de la demande: 07.12.2011
(73) Titulaire: Guillemot Corporation, 35135 Chantepie (FR)
(72) Inventeur: Pennaneac'h, Patrick, 35220 CHATEAUBOURG (FR); Jaouen, Jean-Yves, 56350 SAINT JEAN LA POTERIE (FR)
(74) Mandataire: Hays, Bertrand

(56) Documents cités:
- JP-A- 5 231 509
- US-A- 5 357 820
- US-B2- 7 650 810

## Description

La présente invention concerne un contrôleur de vitesses, notamment pour jeu vidéo, apte à fonctionner au moins selon un mode séquentiel et un mode manuel.

L'invention concerne un contrôleur de vitesses consistant en un contrôleur pour jeu vidéo permettant de simuler l'utilisation d'un ou plusieurs des organes de commande de la vitesse d'un véhicule simulé, c'est-à-dire plus précisément, un contrôleur qui produit les informations correspondant à l'actionnement d'un levier de vitesses (ou sélecteur de vitesses), d'un accélérateur ou d'un frein (frein à main, par exemple) pour un véhicule simulé.

Plus précisément, l'invention concerne un contrôleur de vitesses apte à fonctionner au moins selon un mode séquentiel et un mode manuel, comprenant un boitier support, un levier monté articulé sur ledit boitier support et apte à pivoter, à partir d'une position neutre, dans une direction longitudinale autour d'un axe transversal et dans une direction transversale autour d'un axe longitudinal, les axes transversal et longitudinal étant orthogonaux, et des moyens de détection aptes à détecter, en mode manuel, au moins deux positions différentes du levier du contrôleur de vitesses obtenues par pivotement du levier du contrôleur de vitesses au moins dans la direction longitudinale à partir de la position neutre et, en mode séquentiel, au moins deux positions différentes du levier du contrôleur de vitesses.

Un tel contrôleur de vitesses est par exemple décrit dans le document de brevet US 7 650 810. En mode séquentiel, le levier de vitesses pivote autour de l'axe transversal entre deux positions différentes de part et d'autre de la position neutre. Pour guider le déplacement du levier de vitesses entre la position neutre et les différentes positions du mode manuel et/ou du mode séquentiel, le contrôleur de vitesses est muni d'une grille comprenant une fente transversale appelée également rangée neutre et une pluralité de fentes longitudinales débouchant dans la fente transversale.

En mode séquentiel, l'utilisateur déplace le levier dans deux fentes longitudinales en vis-à-vis placées de part et d'autre de la position neutre. Pour le passage du mode manuel au mode séquentiel, la grille est alors modifiée par un mécanisme coulissant pour limiter le déplacement du levier de vitesses aux deux fentes longitudinales précitées. La grille peut être également remplacée par une autre grille comportant une seule fente longitudinale correspondant aux deux fentes longitudinales en vis-à-vis.

La mise en oeuvre d'un tel contrôleur de vitesses requiert, en plus de moyens de détection destinés à détecter l'ensemble des positions du mode manuel et du mode séquentiel, des moyens de rappel élastique dits transversaux pour ramener élastiquement le levier du contrôleur de vitesses vers la position neutre selon une direction transversale ainsi que des moyens de rappel élastique dits longitudinaux pour ramener élastiquement le levier du contrôleur de vitesses vers la position neutre selon une direction longitudinale, les moyens de rappel élastique longitudinaux n'étant utiles que dans le mode séquentiel.

Un but de l'invention est de proposer une nouvelle configuration de contrôleur de vitesses permettant de réduire le nombre de composants et le coût du contrôleur de vitesses.

Un autre but de l'invention est de fournir un tel contrôleur de vitesses dont l'ergonomie soit améliorée.

Un autre but de l'invention, selon au moins un mode de réalisation, est de fournir un contrôleur de vitesses multi-mode capable de simuler tour à tour la fonction de différents organes de commandes de la vitesse d'un véhicule simulé tout en préservant le réalisme des jeux vidéo.

Un autre but de l'invention est de fournir un tel contrôleur de vitesses, dont les modifications par rapport à l'art antérieur sont simples et peu coûteuses à mettre en oeuvre.

L'invention a également pour but, selon au moins un mode de réalisation, de fournir un contrôleur de vitesses qui puisse être fixé facilement à différents supports et dont le positionnement sur le support puisse être modifié facilement.

Un autre but de l'invention est de fournir un contrôleur de vitesses qui soit précis à l'utilisation.

L'invention a également pour but, selon au moins un mode de réalisation, de fournir un contrôleur de vitesses dont l'encombrement est relativement réduit.

A cet effet, la présente invention concerne un contrôleur de vitesses, notamment pour jeu vidéo, apte à fonctionner au moins selon un mode séquentiel et un mode manuel, comprenant un boitier support, un levier monté articulé sur ledit boitier support et apte à pivoter, à partir d'une position neutre, dans une direction longitudinale autour d'un axe transversal et dans une direction transversale autour d'un axe longitudinal, et des moyens de détection aptes à détecter, en mode manuel, au moins deux positions différentes du levier du contrôleur de vitesses obtenues par pivotement du levier du contrôleur de vitesses dans au moins ladite direction longitudinale à partir de la position neutre et, en mode séquentiel, au moins deux positions différentes du levier du contrôleur de vitesses décalées par rapport à la position neutre, ledit contrôleur de vitesses étant remarquable en ce que les moyens de détection sont aptes à détecter, en mode séquentiel, au moins deux positions différentes du levier du contrôleur de vitesses obtenues par pivotement dudit levier dans ladite direction transversale à partir de la position neutre.

Ainsi, selon l'invention, les positions du levier du contrôleur de vitesses en mode séquentiel sont obtenues par déplacement du levier du contrôleur de vitesses selon une direction correspondant à la rangée neutre du contrôleur de vitesses. Il n'est alors pas nécessaire d'équiper le contrôleur de vitesses avec des moyens de rappel élastique longitudinaux.

Avantageusement, le mode manuel comprend au moins quatre positions, par exemple 6 ou 8 positions.

Selon un mode de réalisation particulier, le contrôleur de vitesses comprend en outre une première grille montée ou apte à être montée sur ledit boitier support, ladite première grille comportant, pour le passage du levier du contrôleur de vitesses, une fente transversale (rangée neutre du mode manuel) et au moins deux fentes longitudinales débouchant dans ladite fente transversale, ladite fente transversale étant positionnée et dimensionnée pour guider le levier du contrôleur de vitesses entre la position neutre et lesdites au moins deux positions du mode séquentiel et lesdites fentes longitudinales étant positionnées et dimensionnées pour guider le levier du contrôleur de vitesses entre la fente transversale et lesdites au moins quatre positions du mode manuel.

Selon un mode de réalisation particulier, la première grille est une grille amovible. Dans ce mode de réalisation, le levier du contrôleur de vitesses comporte, à son extrémité libre supérieure, un pommeau fixé de façon amovible à la tige dudit levier pour permettre d'ôter la première grille.

Selon un mode de réalisation particulier, le levier du contrôleur de vitesses présente en mode séquentiel deux positions différentes disposées de part et d'autre de la position neutre, la fente transversale de la première grille étant dimensionnée de sorte que lesdites deux positions différentes sont atteintes en déplaçant le levier du contrôleur de vitesses vers les extrémités de ladite fente transversale, lesdites deux positions différentes étant atteintes avant ou en butée contre les extrémités de la fente transversale.

Avantageusement, le contrôleur de vitesses comporte une deuxième grille amovible apte à être montée sur le boitier support ou, le cas échéant, sur ladite première grille, ladite deuxième grille comportant, pour le passage du levier du contrôleur de vitesses, une seule fente, transversale, ladite fente transversale de ladite deuxième grille étant dimensionnée de sorte que, lorsque le levier du contrôleur de vitesses présente en mode séquentiel deux positions différentes disposées de part et d'autre de la position neutre, lesdites deux positions différentes sont atteintes en déplaçant le levier du contrôleur de vitesses vers les extrémités de ladite fente transversale.

Avantageusement, la longueur de la fente transversale de la deuxième grille est inférieure à la longueur de la fente transversale de la première grille, lesdites deux positions différentes du mode séquentiel étant atteintes lorsque le levier du contrôleur de vitesses est en butée contre les extrémités de la fente transversale de la deuxième grille. La longueur de la fente transversale de cette deuxième grille est déterminée pour obtenir un débattement court pour le mode séquentiel.

Le contrôleur de vitesses comprend des moyens de rappel élastique pour ramener élastiquement le levier du contrôleur de vitesses desdites au moins deux positions du mode séquentiel vers ladite position neutre.

Selon un mode de réalisation avantageux, le boitier support comprend un ensemble fixe, de préférence équipé de moyens de fixation, destiné à être monté fixe sur un support tel qu'une table, et un ensemble mobile sur lequel est monté articulé le levier du contrôleur de vitesses, ledit ensemble mobile étant monté mobile en rotation sur ledit ensemble fixe autour d'un axe de rotation sensiblement perpendiculaire audit axe transversal et audit axe longitudinal.

L'ensemble mobile peut également être intégré dans le boîtier d'un contrôleur de jeu vidéo par exemple, dans le boîtier d'un volant. Dans ce cas, ledit ensemble mobile est monté mobile en rotation par rapport au boîtier dudit contrôleur de jeu vidéo, ledit boîtier constituant alors l'ensemble fixe, et le contrôleur de jeu vidéo avec contrôleur de vitesses intégré constituant alors le boitier support.

L'ergonomie du contrôleur de vitesses est améliorée car la rotation de l'ensemble mobile permet d'ajuster, en fonction de l'emplacement du contrôleur de vitesses et des besoins de l'utilisateur, la direction des fentes de la ou des grilles par rapport au support sur lequel est fixé l'ensemble mobile. L'utilisateur peut ainsi faire pivoter le levier du contrôleur de vitesses avec plus de confort.

Lors du passage du mode manuel au mode séquentiel, l'utilisateur peut également faire pivoter l'ensemble mobile autour de son axe de rotation, de préférence de 90°, pour modifier l'orientation de l'axe transversal, et donc l'orientation de la rangée neutre du mode manuel, du contrôleur de vitesses et améliorer son ergonomie.

Selon un mode de réalisation particulier, l'ensemble fixe comprend une plaque support munie d'une ouverture sensiblement circulaire à travers laquelle est monté mobile en rotation ledit ensemble mobile.

L'ensemble mobile comprend une couronne mobile en rotation autour de l'axe de rotation dans l'ouverture de la plaque support, le passage interne de la couronne étant traversé par le levier du contrôleur de vitesses, et un cadre support, fixé à la paroi inférieure de ladite couronne, le levier du contrôleur de vitesses étant articulé de manière pivotante autour dudit axe transversal et dudit axe longitudinal via des moyens d'articulation.

Selon un mode de réalisation particulier, le cadre support de forme générale en U comporte une base et deux branches latérales parallèles s'étendant à partir de ladite base et lesdits moyens d'articulation sont montés entre les branches latérales du cadre support. La première grille est alors montée sur la paroi supérieure de la couronne.

Avantageusement, le boitier support comprend des moyens de blocage en rotation dudit ensemble mobile sur l'ensemble fixe.

Selon un mode de réalisation particulier, les moyens de blocage en rotation sont aptes à bloquer ledit ensemble mobile dans au moins une position manuelle et une position séquentielle décalées angulairement de 90° l'une de l'autre.

Les moyens de blocage en rotation comprennent un loquet monté mobile en translation sur ladite plaque support et apte à coopérer avec au moins deux évidements ménagés dans la paroi externe de la couronne et décalés angulairement pour bloquer la rotation de ladite couronne.

Les moyens de détection comprennent de préférence un unique capteur à effet Hall associé à un aimant, ledit capteur à effet Hall étant monté sur un élément parmi l'extrémité libre inférieure du levier du contrôleur de vitesses et le boitier support, ledit aimant étant monté en regard dudit capteur à effet Hall sur l'autre élément parmi l'extrémité libre inférieure du levier du contrôleur de vitesses et le boitier support.

Avantageusement, ce capteur à effet Hall est monté sur l'ensemble mobile, en particulier sur la base du cadre support dudit ensemble mobile, et l'aimant est monté en regard dudit capteur à effet Hall sur l'extrémité inférieure du levier du contrôleur de vitesses.

En variante, le capteur à effet Hall desdits moyens de détection est monté sur l'extrémité inférieure du levier du contrôleur de vitesses et l'aimant est monté en regard dudit capteur à effet Hall sur l'ensemble fixe, en particulier sur la base du cadre support.

Enfin, le boitier support comprend avantageusement des moyens de fixation, par exemple de type étrier ou serre-joint, dudit boitier support à un meuble, tel qu'une table ou d'un bureau.

La principale application du contrôleur de vitesses de l'invention est de simuler un appareil de sélection de vitesses apte à fonctionner selon un mode séquentiel et un mode manuel.

Selon une autre application, le contrôleur de vitesses de l'invention est utilisé pour simuler un frein à main.

Selon une autre application, le contrôleur de vitesses de l'invention est utilisé pour simuler à la fois un frein à main et un accélérateur manuel.

L'invention sera mieux comprise, et d'autres buts, détails, caractéristiques et avantages apparaîtront plus clairement au cours de la description explicative détaillée qui va suivre, en se référant ci-dessous aux dessins annexés, parmi lesquels:
- la figure 1 est une vue d'ensemble en perspective d'un contrôleur de vitesses conforme à l'invention dans laquelle le contrôleur de vitesses est équipé d'une grille pour un fonctionnement en mode manuel et éventuellement en mode séquentiel;
- la figure 2 est une vue d'ensemble en perspective d'un contrôleur de vitesses conforme à l'invention dans laquelle le contrôleur de vitesses est équipée d'une grille pour un fonctionnement en mode séquentiel;
- la figure 3 est une vue en perspective du contrôleur de vitesses de la figure 1, dans laquelle le capot supérieur et le capot inférieur du contrôleur de vitesses ont été supprimés;
- la figure 4 est une vue de face du contrôleur de vitesses de la figure 3 sans les moyens de fixation;
- la figure 5 représente, à titre d'exemple, des positions du levier du contrôleur de vitesses détectées par un capteur à effet Hall triaxial pour le mode séquentiel;
- la figure 6 représente, à titre d'exemple, des positions du levier du contrôleur de vitesses détectées par un capteur à effet Hall triaxial pour le mode manuel;
- la figure 7 représente isolément une vue en perspective d'une grille pour le mode manuel;
- la figure 8 représente isolément une vue en perspective d'une grille pour le mode séquentiel;
- la figure 9 est une vue en perspective analogue à celle de la figure 1 dans laquelle le système de fixation du contrôleur de vitesses a été supprimé;
- la figure 10 représente isolément une vue en perspective d'une plaque support du contrôleur de vitesses; et
- la figure 11 représente isolément une vue en perspective d'une couronne du contrôleur de vitesses.

L'invention concerne un contrôleur de vitesses pour jeu vidéo apte à fonctionner en mode manuel, appelé également mode H, et mode séquentiel, appelé également mode automatique.

Le terme « jeu vidéo » englobe notamment les jeux vidéo de divertissement, les jeux sérieux (pour « serious games » en langue anglaise) et les logiciels de simulation de conduite ou de pilotage de véhicule.

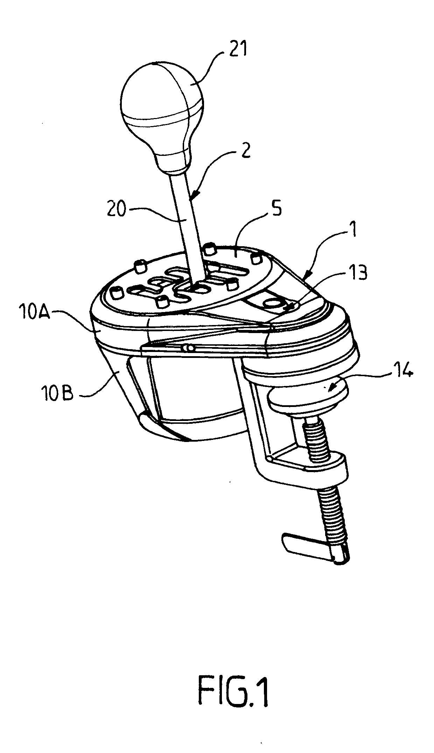

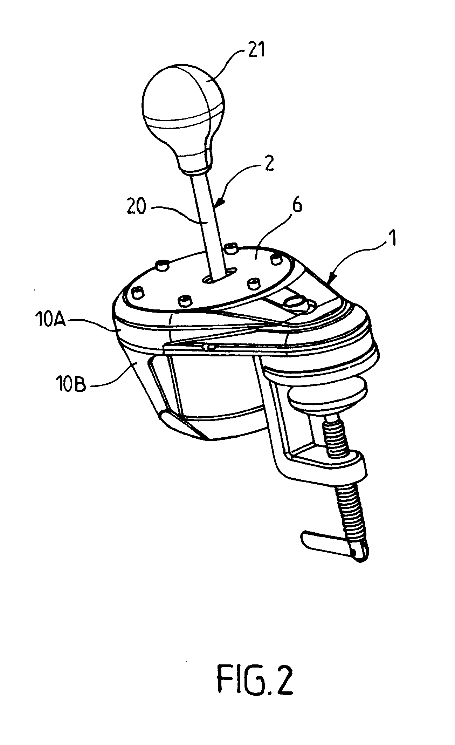

En référence aux figures 1 à 4, le contrôleur de vitesses comprend:
- un boitier support 1,
- un levier 2 comprenant une tige 20 munie à son extrémité libre supérieure d'un pommeau 21, de préférence amovible,
- des moyens 3 d'articulation du levier du contrôleur de vitesses pour permettre le pivotement du levier 2, à partir d'une position neutre, dans une direction longitudinale autour d'un axe transversal Y et dans une direction transversale autour d'un axe longitudinal X, et
- des moyens 4 de détection aptes à détecter, en mode manuel, la position neutre et huit positions différentes du levier 2 obtenues par pivotement du levier 2 dans la direction longitudinale et la direction transversale à partir de la position neutre et, en mode séquentiel, la position neutre et deux positions différentes du levier 2 décalées transversalement par rapport à la position neutre et obtenues par pivotement du levier 2 dans ladite direction transversale à partir de la position neutre.

Ainsi, en mode séquentiel, l'utilisateur déplace le levier du contrôleur de vitesses le long de la rangée neutre du levier 2. Comme nous le verrons plus loin, cette nouvelle configuration permet notamment d'utiliser des moyens de rappel élastique transversaux déjà existants du contrôleur de vitesses pour ramener, en mode séquentiel, le levier 2 vers la position neutre.

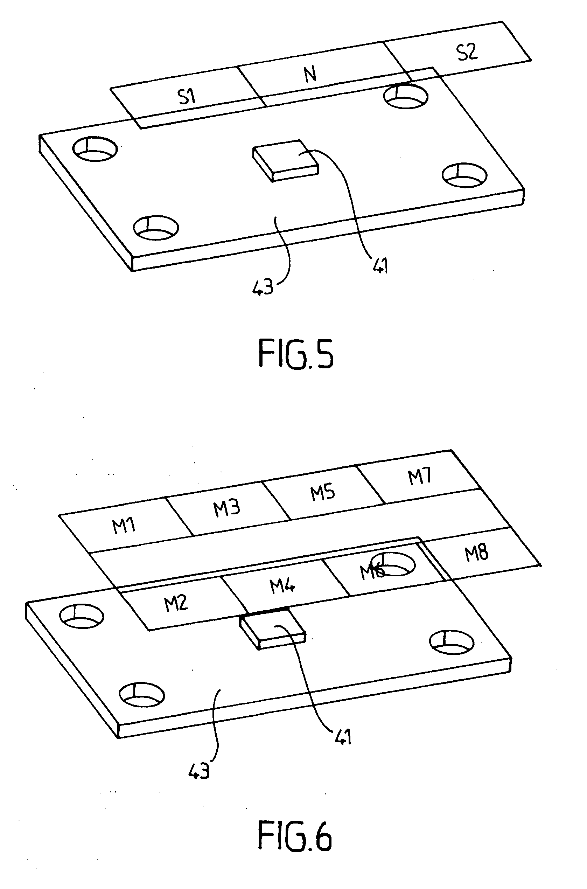

Les différentes positions du levier du contrôleur de vitesses en mode manuel et en mode séquentiel sont illustrées par les figures 5 et 6. En plus de la position neutre référencée N, le mode séquentiel comprend deux positions, référencées S1 et S2, disposées de part et d'autre de la position neutre N, et le mode manuel comprend huit positions référencées M1 à M8, en vis-à-vis deux par deux par rapport à la position neutre N. Chacune de ces positions correspond à une position particulière de l'extrémité inférieure du levier du contrôleur de vitesses 2.

Le boitier support 1 est équipé, dans sa partie supérieure, d'une grille 5, de préférence amovible, pour guider le déplacement du levier du contrôleur de vitesses entre la position neutre et les différentes positions du levier du contrôleur de vitesses en mode manuel et mode séquentiel. Il comporte également un capot supérieur 10A et un capot inférieur 10B assemblés par clipsage ou vissage.

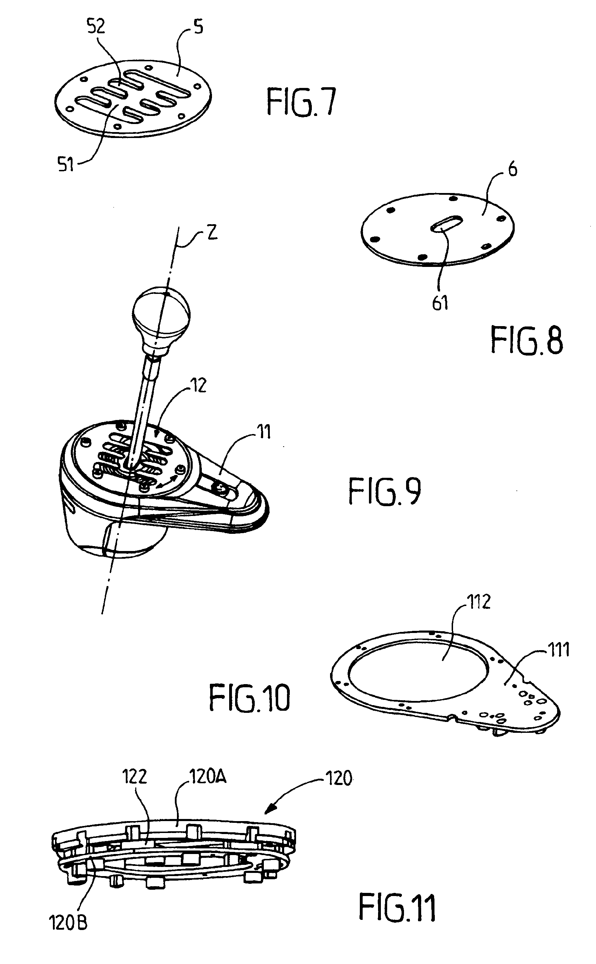

La grille 5 est montée sur le boitier support 1 et comporte, pour le passage du levier 2, une fente transversale 51 et huit fentes longitudinales 52 débouchant chacune dans la fente transversale comme illustré à la figure 7. La fente transversale 51 est positionnée et dimensionnée pour guider le déplacement de l'extrémité inférieure libre du levier 2 entre la position neutre N et les deux positions S1 et S2 du mode séquentiel. De même, chacune des fentes longitudinales 52 est positionnée et dimensionnée pour guider le déplacement de l'extrémité inférieure libre du levier du contrôleur de vitesses entre la fente transversale 51 et l'une des positions M1 à M8 du mode manuel.

Ces positions sont détectées par les moyens de détection 4. Ces moyens de détection comprennent un capteur triaxial à effet Hall 41 associé à un aimant 42. Un capteur triaxial à effet Hall présente une grande précision qui est classiquement supérieure à celle d'un potentiomètre ou d'un encodeur optique. Il présente également un encombrement réduit. Le capteur triaxial à effet Hall 41 est monté sur une carte de circuit imprimé 43, elle-même montée sur une partie fixe du boitier support, et l'aimant 42 est monté sur l'extrémité libre inférieure du levier 2 en regard du capteur à effet Hall.

Selon une variante, le capteur à effet Hall 41 est monté sur l'extrémité libre inférieure du levier 2 et l'aimant 42 est monté en regard du capteur à effet Hall sur une partie fixe du boitier support.

Avantageusement, le contrôleur de vitesses comporte une deuxième grille 6 amovible apte à être montée sur le boitier support 1 en remplacement de la grille 5 ou sur la grille 5, cette deuxième grille étant spécifiquement conçue pour le mode séquentiel pour guider le déplacement de l'extrémité inférieure libre du levier 2 entre la position neutre N et les deux positions S1 et S2 du mode séquentiel. Comme illustré à la figure 8, la grille 6 comporte uniquement une fente transversale 61 dimensionnée pour autoriser en mode séquentiel le déplacement de l'extrémité libre inférieure du levier du contrôleur de vitesses uniquement entre la position neutre N et les positions S1 et S2.

Avantageusement, la longueur de la fente transversale 61 est inférieure à la longueur de la fente transversale 51 pour réduire le débattement du levier du contrôleur de vitesses en mode séquentiel, les positions S1 et S2 étant alors atteintes lorsque le levier du contrôleur de vitesses 2 est en butée contre les extrémités de la fente transversale 61.

En variante, on pourrait prévoir, à la place de la grille 6, des volets venant couvrir au moins partiellement les fentes longitudinales 52 de la grille 5 pour guider le levier du contrôleur de vitesses en mode séquentiel.

Pour modifier l'orientation de la rangée neutre et améliorer l'ergonomie du contrôleur de vitesses, le boitier support 1 comprend un ensemble fixe 11 et un ensemble mobile 12 sur lequel est monté articulé le levier du contrôleur de vitesses. L'ensemble mobile 12 est monté mobile en rotation sur l'ensemble fixe autour d'un axe de rotation Z qui est sensiblement perpendiculaire aux axes X et Y comme illustré à la figure 9.

L'ensemble fixe 11 comprend une plaque support 111 munie d'une ouverture circulaire 112 à travers laquelle est monté mobile en rotation l'ensemble mobile 12. Cette plaque est montrée de manière isolée sur la figure 10. Dans cette figure, le contour extérieur de la plaque support 111 est ovale de manière à ce que la plaque support 11 soit bloquée en rotation par rapport au capot supérieur 10A et/ou un capot inférieur 10B. Il pourrait être de forme différente.

L'ensemble mobile 12 comprend une couronne 120, de forme circulaire, mobile en rotation autour de l'axe Z dans l'ouverture 112 et un cadre support 121 fixé à la paroi inférieure de la couronne. La couronne définit un passage interne traversé par le levier du contrôleur de vitesses.

Comme illustré à la figure 11, la couronne 120 est formée d'une couronne supérieure 120A et d'une couronne inférieure 120B. La couronne inférieure 120B est prévue pour tourner autour de l'axe Z à l'intérieur de l'ouverture 112. A cet effet, le diamètre externe de la couronne inférieure 120B est sensiblement égal au diamètre de l'ouverture 112. La couronne supérieure 120A repose par des plots 122 sur la couronne inférieure 120B.

La grille 5 est montée sur la paroi supérieure de la couronne supérieure 120A. Des vis de fixation 123 sont prévues pour fixer la grille 5, et/ou le cas échéant la grille 6, sur la couronne supérieure 120A. Ces vis servent également à fixer la couronne supérieure 120A sur la couronne inférieure 120B.

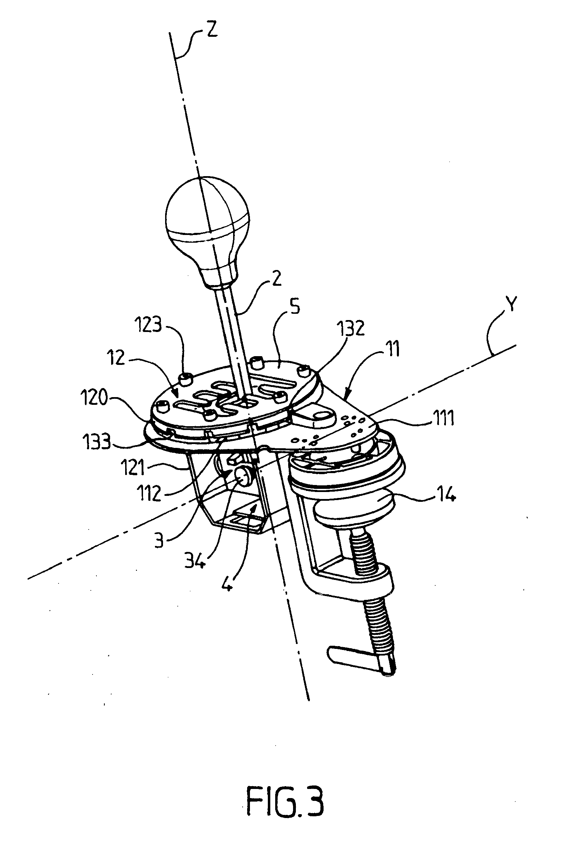

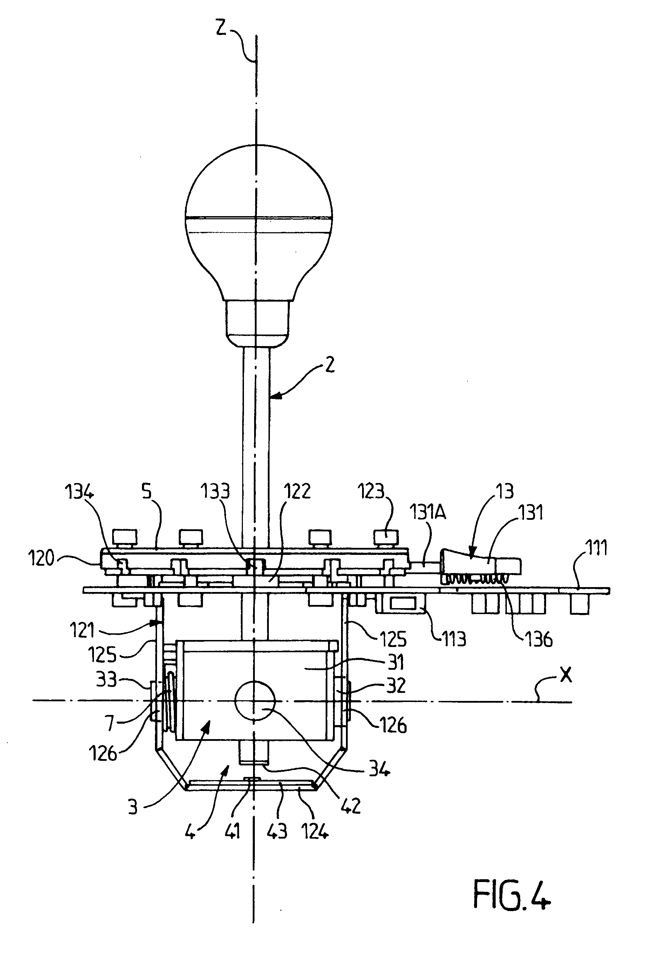

Comme montré aux figures 3 et 4, le cadre support 121 est de forme générale en U. Il comprend une base 124 et deux branches latérales 125 parallèles s'étendant à partir de la base. La carte de circuit imprimé 43 supportant le capteur triaxial à effet Hall 41 est montée sur la face supérieure de la base 124. Par ailleurs, les moyens d'articulation 3 du levier du contrôleur de vitesses sont placés entre les deux branches latérales 125.

Comme montré notamment à la figure 4, les moyens d'articulation 3 du levier du contrôleur de vitesses comprennent un boitier 31 monté pivotant entre les deux branches latérales 125 au moyen de deux pivots 32 et 33 disposés sur deux parois latérales du boitier 31. Ces deux pivots sont placés sur l'axe longitudinal X et sont prévus pour faire pivoter le boitier 31 autour de l'axe X. Ces deux pivots sont montés rotatifs à l'intérieur d'ouvertures 126 ménagées dans les branches latérales 125. Le boitier 31 comprend en outre une tige 34 définissant l'axe transversal Y. Cette tige est montée entre deux parois longitudinales du boitier. La tige 34 est prévue pour pivoter à l'intérieur d'ouvertures ménagées dans les parois longitudinales du boitier. Ce montage pivotant est bien connu en soi. Le boitier 31 comprend également des moyens connus (non représentés) aptes à maintenir le levier du contrôleur de vitesses dans l'une des positions M1 à M8 en mode manuel.

Des moyens de rappel élastique 7 sont montés entre le boitier 31 et le cadre support 121 pour ramener élastiquement le levier du contrôleur de vitesses vers la position neutre. Ces moyens de rappel élastique transversaux existent déjà dans les boites de vitesses actuelles pour ramener selon une direction transversale un levier de vitesses vers la position neutre. Ils servent habituellement uniquement en mode manuel. Selon l'invention, ils servent également en mode séquentiel.

Le boitier support 1 comprend également des moyens de blocage 13 en rotation de l'ensemble mobile 12 sur l'ensemble fixe 11. Les moyens de blocage 13 sont aptes à bloquer l'ensemble mobile dans au moins deux positions de blocage, à savoir une position dite manuelle pour le mode manuel et une position dite séquentielle pour le mode séquentiel, décalées angulairement de 90° l'une de l'autre.

A cet effet, les moyens de blocage 13 comprennent un loquet 131 monté mobile en translation sur la plaque support 111 et apte à coopérer avec au moins deux évidements 132 et 133 ménagés dans la paroi externe de la couronne supérieure 120A pour bloquer la rotation de la couronne. Les évidements 132 et 133 sont décalés angulairement de 90°. Le loquet 131 est muni d'un ergot 131A apte à s'engager dans l'évidement 132 pour bloquer l'ensemble mobile dans la position manuelle. L'ergot 131A s'engage par ailleurs dans l'évidement 133 pour bloquer l'ensemble mobile dans la position séquentielle. Des évidements supplémentaires 134 sont également prévus dans la couronne supérieure pour bloquer en rotation l'ensemble mobile à d'autres positions angulaires. Un ressort de rappel 136 est prévu pour maintenir le loquet 131 dans les évidements 132, 133 ou 134.

En variante, le loquet 131 est supprimé de manière à supprimer les jeux mécaniques engendrés par un tel moyen de blocage. On le remplace par un autre moyen de blocage, par exemple, par un serrage mettant en oeuvre deux vis agissant entre la couronne supérieure 120A et la couronne inférieure qui est solidaire du cadre support 121. Après serrage, les têtes des vis se trouvent dans des logements ménagés dans la couronne supérieure de manière à ne pas dépasser de la surface supérieure de celle-ci. Ces vis traversent l'ouverture 112 de la plaque support 111. La couronne supérieure et la couronne inférieure sont alors prévues pour tourner autour de l'axe Z. Dans cette variante, le diamètre externe de la couronne supérieure et de la couronne inférieure est sensiblement supérieur au diamètre de l'ouverture 112. Par conséquent, en serrant ces vis, la couronne supérieure 120A (les plots de la couronne supérieure) et la couronne inférieure serrent entre elles la plaque support 111. On comprend donc qu'après avoir desserré ces vis, la couronne supérieure et le cadre support 121 peuvent pivoter par rapport à la plaque support 111. Un tel moyen de blocage présente l'intérêt de ne pas limiter le nombre de positions angulaires que peut prendre l'ensemble mobile.

Le boitier support 1 comprend également des moyens de fixation 14, de type étrier ou serre-joint, pour le fixer à un meuble, tel qu'une table, un bureau ou tout support à l'intérieur d'un habitacle. Ces moyens de fixation permettent de modifier facilement l'emplacement du contrôleur de vitesses en desserrant les moyens 14.

Pour prévenir l'introduction de corps étrangers dans le mécanisme du contrôleur de vitesses, des moyens d'obturation de l'ouverture 112 sont avantageusement prévus, par exemple un soufflet en caoutchouc comportant une ouverture pour la tige 20 ou deux brosses minces disposées de part et d'autre de la rangée neutre. Ces moyens d'obturation se déforment lorsque le levier 2 quitte sensiblement la position de repos et reprennent leur forme lorsque le levier 2 revient dans la position de repos.

Par ailleurs, la zone de la tige 20 susceptible d'entrer en contact avec les grilles 5 et/ou 6 est avantageusement revêtue d'une bague en téflon pour limiter la friction entre ces pièces.

Dans un mode de réalisation particulier, la tige 21 est creuse et le pommeau 21 intègre un dispositif connu de production de vibrations ou de chocs consistant, par exemple, en une masse mobile et un moteur électrique alimenté en énergie et commandé par le circuit de traitement ou un dispositif externe de traitement de données. Ce dispositif de production de vibrations ou de chocs est destiné à faire ressentir à l'utilisateur les vibrations du véhicule simulé lorsqu'il a le levier en main, par exemple des vibrations correspondants à un sous-régime ou à un choc correspondant au passage d'une vitesse, ou encore des vibrations simulant la mise en oeuvre d'un système d'antiblocage des roues, etc...

Un bouton sélecteur 113 de mode est prévu au niveau de la plaque support pour que l'utilisateur sélectionne le mode de fonctionnement du contrôleur de vitesses: mode manuel ou mode séquentiel.

En variante, on peut prévoir un dispositif de détection automatique de la rotation de l'ensemble mobile 12 pour passer du mode manuel au mode séquentiel ou inversement.

Selon une autre variante, à la place ou en complément d'un dispositif de détection automatique de la rotation de l'ensemble mobile 12, on peut prévoir un dispositif de détection automatique de la présence ou non d'une grille spécifique à un mode du contrôleur de vitesses pour passer automatiquement d'un mode à l'autre. A cette fin, un ou plusieurs capteurs de présence, par exemple, du type bouton poussoir ou dôme d'élastomère à contact carbone, peuvent être logés dans la couronne 120. Chaque capteur de présence ouvre ou ferme un circuit selon qu'un objet de la grille, par exemple une protubérance positionnée à un emplacement spécifique d'une grille, exerce un appui sur la partie sensible du capteur de présence et déforme ainsi une lame souple ou le dôme d'élastomère de façon suffisante pour changer l'état du capteur, le faisant ainsi passer d'un état ouvert à un état fermé ou inversement.

Par ailleurs, les signaux issus du capteur à effet Hall 41 et du bouton sélecteur 113 sont transmis vers un circuit de traitement non représenté qui peut être embarqué ou non dans le contrôleur de vitesses. Le capteur à effet Hall 41 peut également être intégré dans le circuit de traitement.

Le contrôleur de vitesses a été décrit ci-dessus comme un appareil de sélection de vitesses apte à fonctionner selon un mode manuel et un mode séquentiel.

Selon une autre application, le contrôleur de vitesses de l'invention est utilisé pour simuler un frein à main. Dans cette application, le levier 2 pivote autour de l'axe longitudinal X, dans une direction transversale, entre deux positions différentes, une première position correspondant à une absence de freinage et une deuxième position décalée transversalement de la première position correspondant à un freinage maximal. La première position correspond avantageusement à la position neutre du contrôleur de vitesses lorsqu'il fonctionne en tant qu'appareil de sélection de vitesses.

Dans cette application, l'utilisateur déplace le levier dans la fente transversale (rangée neutre) pour commander le freinage et, si la première position correspond à la position neutre N définie précédemment, le levier ne pivote dans la fente transversale que d'un côté de la position neutre.

Dans une autre application, le contrôleur de vitesses peut être utilisé à la fois comme frein à main et accélérateur manuel. Dans cette application, l'utilisateur utilise également de préférence la rangée neutre du mode manuel pour le déplacement du levier 2. Le levier 2 pivote autour de l'axe longitudinal X, dans une direction transversale, entre deux positions de part et d'autre de la position neutre. Une première position est la position de commande de vitesse maximale et la deuxième position est la position de commande de freinage maximum. De préférence, la deuxième position est opposée à la première position par rapport à la position neutre. Dans cette application, le levier pivote alors dans la fente transversale de part et d'autre de la position neutre.

Qu'il s'agisse de simuler un appareil de sélection de vitesses, un accélérateur ou un frein (frein à main, par exemple), le contrôleur de vitesses est destiné à détecter au moins deux positions différentes du levier du contrôleur de vitesses et ces positions correspondent à un paramètre de la vitesse du véhicule simulé. Dans ces différentes applications, le contrôleur de vitesses tel que décrit précédemment agit pour contrôler la vitesse. Dans la première application, le contrôleur de vitesses est utilisé pour sélectionner une vitesse. Dans l'application de frein à main, le contrôleur de vitesses est utilisé pour sélectionner la force de freinage à opposer à la rotation des roues d'un véhicule, ce qui revient aussi à contrôler la vitesse de ce véhicule. Dans l'application de frein et d'accélérateur, le contrôleur de vitesses est utilisé pour sélectionner la puissance demandée au moteur, ce qui revient également à contrôler la vitesse du véhicule.

Le bouton sélecteur 113 est utilisé pour sélectionner le mode de fonctionnement souhaité: mode manuel de sélection de vitesses, mode séquentiel de sélection de vitesses, mode frein à main uniquement ou mode frein à main et accélérateur.

Nous allons ci-après décrire l'utilisation du contrôleur de vitesses de l'invention dans l'application de frein à main ainsi que les modifications éventuelles qui peuvent lui être apportées pour cette application.

Dans cette application, le levier 2 se déplace dans la fente transversale. Les moyens de rappel élastique transversaux 7 sont utilisés ramener le levier 2 vers la position neutre correspondant à une absence de freinage. Il est à noter qu'il n'est pas nécessaire de prévoir de moyens de blocage en position pour le levier 2 dans cette application de frein à main. En effet, l'utilité d'une position de stationnement, dans laquelle le levier 2 est bloqué en position freinage maximal, est faible pour la majorité des jeux vidéo.

La position de repos du levier 2 (lorsque l'utilisateur n'exerce aucune action sur le levier) est située dans la rangée neutre à l'intersection avec la direction longitudinale correspondant aux positions référencées M3 et M4. Sur les figures 1 et 3, le levier 2 est représenté en position de repos. La position de repos du levier 2 est ainsi décalée par rapport au milieu de la rangée neutre. Lorsque le contrôleur de vitesses est utilisé comme frein à main, l'utilisateur déplace le levier 2 le long de la rangée neutre du contrôleur de vitesses. Le décalage de la position de repos par rapport au milieu de la rangée neutre permet d'obtenir un débattement plus grand du levier d'un côté de la position de repos. Lorsque le contrôleur de vitesses est utilisé comme frein à main, le levier 2 se déplace ainsi du côté de la position de repos qui offre le plus grand débattement au levier ce qui permet de sélectionner plus précisément la force de freinage.

Pour cette application, le contrôleur de vitesses comporte une troisième grille amovible apte à être montée sur le boitier support 1 en remplacement de la grille 5 ou sur la grille 5, cette troisième grille étant spécifiquement conçue pour guider le déplacement de l'extrémité inférieure libre du levier 2 entre la position neutre N (position du levier 2 en butée à une première extrémité de la fente, et correspondant sensiblement à la position de repos du levier 2) et la position de freinage maximal (position du levier 2 en butée à l'autre extrémité de la fente). Cette troisième grille comporte uniquement une fente transversale dimensionnée pour autoriser, en mode frein à main uniquement, le déplacement de l'extrémité libre inférieure du levier du contrôleur de vitesses uniquement entre ces deux positions. Avantageusement, la longueur de la fente de cette troisième grille est comprise entre la longueur de la fente 51 et la longueur de la fente 61. Mais, la fente de cette troisième grille pourrait être plus longue que la fente 51 pour offrir un plus grand débattement au levier 2.

Si nécessaire, il est possible de prévoir, à l'extrémité de la fente transversale de la troisième grille, une fente longitudinale débouchant dans la fente transversale afin d'y bloquer le levier 2 en position de freinage maximal. Cette fente longitudinale permet de créer simplement une position de stationnement pour le véhicule simulé.

Le contrôleur de vitesses, lorsque son levier 2 est utilisé comme levier de sélection de vitesses, fournit une information digitale. En d'autres termes, lorsque le levier 2 est utilisé comme levier de vitesses, le contrôleur de vitesses fournit une information d'état (1 ou 0) correspondant à chaque position N et M1 à M8 en mode manuel ou à chaque position N et S1 à S2 en mode séquentiel. Par exemple, si le levier 2 est utilisé comme levier de vitesses en mode séquentiel, et lorsque le levier du contrôleur de vitesses est dans la position correspondant à S1, le contrôleur de vitesses fournit les informations S1=1, N=0 et S2=0.

De préférence, lorsque le contrôleur de vitesses est utilisé comme frein à main, le contrôleur de vitesses fournit une information analogique pour avoir plus de précision quant à la force de freinage désirée par l'utilisateur. En d'autres termes, lorsque le levier 2 est utilisé comme levier de frein à main, le contrôleur de vitesses fournit une valeur comprise dans un intervalle, par exemple une valeur comprise entre 0 et 256, et correspondant à la position angulaire du levier 2, la valeur 0 correspondant par exemple à la position neutre du levier (pas de freinage des roues du véhicules simulé) et la valeur 256 correspondant à la position du levier 2 en butée à l'extrémité opposée de la position neutre (freinage maximal de la vitesse des roues du véhicules simulé).

Avantageusement, le contrôleur de vitesses est fourni avec un accessoire ergonomique reproduisant sensiblement la forme d'un levier de frein à main et se plaçant sur la tige 20 en remplacement du pommeau 21 pour cette application de frein à main.

Dans un mode de réalisation particulier, la présence de cet accessoire est détectée par les capteurs de présence du dispositif de détection automatique pour passer automatiquement en mode frein à main uniquement.

Il est à noter que le contrôleur de vitesses peut également fournir des informations supplémentaires telles que la vitesse de rotation du levier 2. Ces informations peuvent être utilisées par le jeu vidéo pour produire des effets particuliers (par exemple, un effet de vibration et le son d'un grincement de boite de vitesses) plus ou moins forts selon la vitesse de rotation du levier (et la course mesurée sur une pédale d'embrayage, par exemple).

Quel que soit le mode d'utilisation du contrôleur de vitesses, les signaux issus du capteur à effet Hall 41, sont traduits par le circuit de traitement avec son logiciel embarqué (ou « firmware » en langue anglaise) en signaux de sortie comportant des informations ou paramètres exploitables par une console de jeu, un ordinateur ou un autre dispositif externe de traitement de données. La nature et le nombre de paramètres exploitables dépendent notamment du jeu vidéo. A partir des informations issues du capteur à effet Hall 41, le logiciel embarqué détermine les caractéristiques du déplacement du levier 2 par rapport au capteur triaxial à effet Hall 41 (valeurs angulaires, vitesses, etc...) et donc par rapport au cadre support 121. En fonction du mode de fonctionnement du contrôleur de vitesses, il interprète certaines de ces caractéristiques en assignant au levier 2 une position du levier en mode manuel (M1-M8 ou N) ou une position en mode séquentiel (S1-S2 ou N) ou en une valeur correspondant à un nombre entier prédéterminé.

Avantageusement, le logiciel embarqué peut être mis à jour. A cette fin, le circuit de traitement comprend une mémoire non volatile effaçable et reprogrammable.

Le logiciel embarqué permet de calibrer chaque position du levier du contrôleur de vitesses. Plus précisément, il permet d'assigner à une plage de données captées ou calculées (telles que des valeurs angulaires selon les axes X et Y, des vitesses de rotation, etc...) une position du levier du contrôleur de vitesses. Par exemple, il détermine que le levier se trouve en position M3 lorsque la valeur angulaire détectée est comprise entre les valeurs angulaires prédéterminées A1 et A2, qu'il se trouve en position neutre lorsque la valeur angulaire détectée est comprise entre les valeurs angulaires prédéterminées A2 et A3, et qu'il se trouve en position M4 lorsque la valeur angulaire détectée est comprise entre les valeurs angulaires prédéterminées A3 et A4. Le logiciel embarqué peut ainsi être réglé pour simuler notamment des rapports plus courts, des passages de vitesses plus rapides. On comprend en effet, qu'un déplacement du levier 2 relativement faible suffit à modifier la valeur angulaire détectée et à lui faire changer de plage, et qu'il suffit par conséquent de choisir les bornes [A1, A2], ]A2, A3] ou ]A3, A4] de la plage de valeur captée en fonction de l'endroit à partir duquel, sur la course de déplacement du levier, on veut que le changement de vitesse s'active. On comprend également que, de la même manière, en mode frein à main uniquement, le logiciel embarqué permet de calibrer la position neutre et la position opposée (position de freinage maximal). Cela permet de déterminer à partir de quelle position angulaire un freinage commence à s'exercer et à partir de quelle position angulaire le freinage est maximal.

Le contrôleur de vitesses peut être fourni avec un programme de configuration permettant notamment de mettre à jour le logiciel embarqué. Ce programme peut aussi être transmis aux éditeurs de logiciels de jeu vidéo de sorte qu'il soit intégré dans leur logiciel de jeu vidéo. Ce programme de configuration comporte par exemple des cases à cocher pour activer, par exemple, un mode frein à main, un mode manuel à rapports courts, voire un mode séquentiel à rapports courts.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Contrôleur de vitesses, notamment pour jeu vidéo, apte à fonctionner selon au moins un mode séquentiel et un mode manuel, comprenant:
- un boitier support (1),
- un levier (2) monté articulé sur ledit boitier support et apte à pivoter, à partir d'une position neutre (N), dans une direction longitudinale autour d'un axe transversal (Y) et dans une direction transversale autour d'un axe longitudinal (X), et
- des moyens de détection (4) aptes à détecter, en mode manuel, au moins deux positions (M1-M8) différentes du levier du contrôleur de vitesses obtenues par pivotement du levier du contrôleur de vitesses dans au moins ladite direction longitudinale à partir de la position neutre et, en mode séquentiel, au moins deux positions différentes (S1,S2) du levier du contrôleur de vitesses,
**caractérisé en ce que** les moyens de détection (4) sont aptes à détecter, en mode séquentiel, au moins deux positions différentes du levier du contrôleur de vitesses obtenues par pivotement du levier du contrôleur de vitesses dans ladite direction transversale à partir de la position neutre.

2. Contrôleur de vitesses selon la revendication 1, **caractérisé en ce qu'**elle comprend une première grille (5) montée ou apte à être montée sur ledit boitier support,
ladite première grille comportant, pour le passage du levier du contrôleur de vitesses, une fente transversale (51) et au moins deux fentes longitudinales (52) débouchant dans ladite fente transversale,
ladite fente transversale (51) étant positionnée et dimensionnée pour guider le levier du contrôleur de vitesses entre la position neutre et lesdites au moins deux positions (S1,S2) du mode séquentiel et lesdites fentes longitudinales (52) étant positionnées et dimensionnées pour guider le levier du contrôleur de vitesses entre la fente transversale et lesdites au moins deux positions (M1-M8) du mode manuel.

3. Contrôleur de vitesses selon la revendication 2, **caractérisé en ce qu'**elle comporte en outre une deuxième grille (6) amovible apte à être montée sur le boitier support ou, le cas échéant, sur ladite première grille,
ladite deuxième grille (6) comportant, pour le passage du levier du contrôleur de vitesses, une fente transversale (61),
la fente transversale (61) de ladite deuxième grille étant dimensionnée de sorte que, le levier du contrôleur de vitesses présentant en mode séquentiel deux positions différentes disposées de part et d'autre de la position neutre, lesdites deux positions différentes sont atteintes en déplaçant le levier du contrôleur de vitesses vers les extrémités de ladite fente transversale.

4. Contrôleur de vitesses selon la revendication 3, **caractérisé en ce que** la longueur de la fente transversale (61) de la deuxième grille est inférieure à la longueur de la fente transversale (51) de la première grille, lesdites deux positions différentes du mode séquentiel étant atteintes lorsque le levier du contrôleur de vitesses est en butée contre les extrémités de la fente transversale de la deuxième grille.

5. Contrôleur de vitesses selon l'une des revendications 1 à 4, **caractérisé en ce que** le boitier support comprend :
- un ensemble fixe (11) destiné à être monté fixe sur un support tel qu'une table, et
- un ensemble mobile (12) sur lequel est monté articulé ledit levier du contrôleur de vitesses (2),
ledit ensemble mobile (12) étant monté mobile en rotation sur ledit ensemble fixe autour d'un axe de rotation (Z) sensiblement perpendiculaire audit axe transversal (Y) et audit axe longitudinal (X).

6. Contrôleur de vitesses selon la revendication 5, **caractérisé en ce que** ledit ensemble fixe (11) comprend une plaque support, (111) munie d'une ouverture (112) sensiblement circulaire à travers laquelle est monté mobile en rotation ladit ensemble mobile.

7. Contrôleur de vitesses selon la revendication 6, **caractérisé en ce que** ledit ensemble mobile comprend :
- une couronne (120) mobile en rotation autour dudit axe de rotation (Z) dans l'ouverture (112) de la plaque support, le passage interne de ladite couronne étant traversé par le levier du contrôleur de vitesses, et
- un cadre support (121), fixé à la paroi inférieure de ladite couronne, le levier du contrôleur de vitesses étant articulé de manière pivotante autour dudit axe transversal et dudit axe longitudinal via des moyens d'articulation (3).

8. Contrôleur de vitesses selon la revendication 7, **caractérisé en ce que** le cadre support (121) de forme générale en U comporte une base (124) et deux branches latérales (125) parallèles s'étendant à partir de ladite base et **en ce que** lesdits moyens d'articulation (3) sont montés entre les branches latérales du cadre support.

9. Contrôleur de vitesses selon les revendications 2 et 7, **caractérisé en ce que** la première grille (5) est montée sur la paroi supérieure de la couronne.

10. Contrôleur de vitesses selon l'une quelconque des revendications 5 à 9, **caractérisé en ce que** le boitier support (1) comprend des moyens (13) de blocage en rotation dudit ensemble mobile par rapport à l'ensemble fixe.

11. Contrôleur de vitesses selon la revendication 10, **caractérisé en ce que** les moyens (13) de blocage en rotation sont aptes à bloquer ledit ensemble mobile (12) dans au moins une position manuelle et une position séquentielle décalées angulairement de 90° l'une de l'autre.

12. Contrôleur de vitesses selon l'une quelconque des revendications 1 à 11, **caractérisé en ce que** lesdits moyens de détection (4) comprennent un capteur à effet Hall (41) associé à un aimant (42),
ledit capteur à effet Hall (41) étant monté sur un élément parmi l'extrémité libre inférieure du levier du contrôleur de vitesses et le boitier support, ledit aimant étant monté en regard dudit capteur à effet Hall sur l'autre élément.

13. Contrôleur de vitesses selon les revendications 5 et 12, **caractérisé en ce que** ledit capteur à effet Hall (41) est monté sur l'ensemble mobile (12) et l'aimant (42) est monté en regard dudit capteur à effet Hall sur l'extrémité inférieure du levier du contrôleur de vitesses.

14. Contrôleur de vitesses selon l'une quelconque des revendications précédentes, **caractérisé en ce que** ledit boitier support comprend des moyens de fixation (14), par exemple de type étrier ou serre-joint, dudit boitier support à un meuble, tel qu'une table ou d'un bureau.

## Patentansprüche

1. Geschwindigkeitsregler, insbesondere für ein Videospiel, der gemäß mindestens einem sequentiellen und einem manuellen Modus arbeiten kann und der Folgendes enthält:
- ein Trägergehäuse (1),
- einen Hebel (2), der gelenkig auf das Trägergehäuse montiert und in der Lage ist, ausgehend von einer neutralen Stellung (N) in einer Längsrichtung um eine Querachse (Y) und in einer Querrichtung um eine Längsachse (X) zu schwenken, und
- Erfassungseinrichtungen (4), die im manuellen Modus mindestens zwei verschiedene Stellungen (M1-M8) des Hebels des Geschwindigkeitsreglers, die durch Schwenken des Hebels des Geschwindigkeitsreglers in mindestens die Längsrichtung ausgehend von der neutralen Stellung erhalten werden, und im sequentiellen Modus mindestens zwei verschiedene Stellungen (S1, S2) des Hebels des Geschwindigkeitsreglers erfassen können,
**dadurch gekennzeichnet, dass** die Erfassungseinrichtungen (4) im sequentiellen Modus mindestens zwei verschiedene Stellungen des Geschwindigkeitsreglers erfassen können, die durch Schwenken des Hebels des Geschwindigkeitsreglers ausgehend von der neutralen Stellung in die Querrichtung erhalten werden.

2. Geschwindigkeitsregler nach Anspruch 1, **dadurch gekennzeichnet, dass** er ein erstes Gitter (5) enthält, das auf das Trägergehäuse montiert ist oder montiert werden kann,
wobei das erste Gitter für den Durchgang des Hebels des Geschwindigkeitsreglers einen Querschlitz (51) und mindestens zwei Längsschlitze (52) aufweist, die in den Querschlitz munden,
wobei der Querschlitz (51) positioniert und bemessen ist, um den Hebel des Geschwindigkeitsreglers zwischen der neutralen Stellung und den mindestens zwei Stellungen (S1, S2) des sequentiellen Modus zu führen, und die Längsschlitze (52) positioniert und bemessen sind, um den Hebel des Geschwindigkeitsreglers zwischen dem Querschlitz und den mindestens zwei Stellungen (M1-M8) des manuellen Modus zur führen,

3. Geschwindigkeitsregler nach Anspruch 2, **dadurch gekennzeichnet**, das er außerdem ein zweites entfernbares Gitter (6) aufweist, das auf das Trägergehäuse oder ggf. auf das erste Gitter montiert werden kann,
wobei das zweite Gitter (6) für den Durchgang des Hebels des Geschwindigkeitsreglers einen Querschlitz (61) aufweist,
wobei der Querschlitz (61) des zweiten Gitters so bemessen ist, dass, wenn der Hebel des Geschwindigkeitsreglers im sequentiellen Modus zwei verschiedene Stellungen aufweist, die zu beiden Seiten der neutralen Stellung angeordnet sind, die zwei verschiedenen Stellungen erreicht werden, indem der Hebel des Geschwindigkeitsreglers zu den Enden des Querschlitzes verschoben wird.

4. Geschwindigkeitsregler nach Anspruch 3, **dadurch gekennzeichnet, dass** die Länge des Querschlitzes (61) des zweiten Gitters kleiner als die Länge des Querschlitzes (51) des ersten Gitters ist, wobei die zwei verschiedenen Stellungen des sequentiellen Modus erreicht werden, wenn der Hebel des Geschwindigkeitsreglers gegen die Enden des Querschlitzes des zweiten Gitters in Anschlag ist.

5. Geschwindigkeitsregler nach einem der Ansprüche 1 bis 4, **dadurch gekennzeichnet, dass** das Trägergehäuse Folgendes enthält:
- eine ortsfeste Einheit (11), die dazu bestimmt ist, auf einen Träger wie einen Tisch montiert zu werden, und
- eine bewegliche Einheit (12), auf die der Hebel des Geschwindigkeitsreglers (2) gelenkig montiert ist,
wobei die bewegliche Einheit (12) auf die feste Einheit um eine Drehachse (Z) im Wesentlichen lotrecht zur Querachse (Y) und zur Längsachse (X) drehbeweglich montiert ist.

6. Geschwindigkeitsregler nach Anspruch 5, **dadurch gekennzeichnet, dass** die feste Einheit (11) eine Tragplatte (111) enthält, die mit einer im Wesentlichen kreisförmigen Öffnung (112) versehen ist, durch die hindurch die bewegliche Einheit drehbeweglich montiert ist.

7. Geschwindigkeitsregler nach Anspruch 6, **dadurch gekennzeichnet, dass** die bewegliche Einheit Folgendes enthält:
- ein Hohlrad (120), das um die Drehachse (Z) in der Öffnung (112) der Tragplatte drehbeweglich ist, wobei der innere Durchgang des Hohlrad vom Hebel des Geschwindigkeitsreglers durchquert wird, und
- einen Tragrahmen (121), der an der unteren Wand des Hohlrades befestigt ist, wobei der Hebels des Geschwindigkeitsreglers um die Querachse und die Längsachse mittel Gelenkeinrichtungen (3) schwenkbar angelenkt ist.

8. Geschwindigkeitsregler nach Anspruch 7, **dadurch gekennzeichnet, dass** der Tragrahmen (121) von allgemeiner U-Form eine Grundplatte (124) und zwei parallele Seitenarme (125) enthält, die sich ausgehend von der Grundplatte erstrecken, und dass die Gelenkeinrichtungen (3) zwischen den Seitenarmen des Tragrahmens montiert sind.

9. Geschwindigkeitsregler nach den Ansprüchen 2 und 7, **dadurch gekennzeichnet, dass** das erste Gitter (5) auf die obere Wand des Hohlrads montiert ist.

10. Geschwindigkeitsregler nach einem der Ansprüche 5 bis 9, **dadurch gekennzeichnet, dass** das Trägergehäuse (1) Einrichtungen (13) zur Drehsperrung der beweglichen Einheit bezüglich der festen Einheit enthält.

11. Geschwindigkeitsregler nach Anspruch 10, **dadurch gekennzeichnet, dass** die Drehsperreinrichtungen (13) die bewegliche Einheit (12) in mindestens einer manuellen Stellung und einer sequentiellen Stellung sperren können, die winkelmäßig um 90° zueinander beabstandet sind.

12. Geschwindigkeitsregler nach einem der Ansprüche 1 bis 11, **dadurch gekennzeichnet, dass** die Erfassungseinrichtungen (4) einen Hall-Sensor (41) enthalten, der einem Magnet (42) zugeordnet ist, wobei der Hall-Sensor (41) auf ein Element, entweder das freie untere Ende des Hebels des Geschwindigkeitsreglers oder das Trägergehäuse, montiert ist, während der Magnet auf das andere Element gegenüber dem Hall-Sensor montiert ist.

13. Geschwindigkeitsregler nach den Ansprüchen 5 und 12, **dadurch gekennzeichnet, dass** der Hall-sensor (41) auf die bewegliche Einheit (12) und der Magnet (42) gegenüber dem Hall-Sensor auf das untere Ende des Hebels des Geschwindigkeitsreglers montiert ist.

14. Geschwindigkeitsregler nach einem der vorhergehenden Ansprüche, **dadurch gekennzeichnet, dass** das Trägergehäuse Befestigungseinrichtungen (14), zum Beispiel von der Art Bügel oder Einspannvorrichtung, des Trägergehäuses an einem Möbelstück wie einem Tisch oder einem Schreibtisch enthält.

## Claims

1. A speed controller, in particular for video games, capable of being operated according to at least a sequential mode and a manual mode comprising:
- a support casing (1),
- a lever (2) hingeably mounted on said support casing and capable of pivoting, from a neutral position (N), in a longitudinal direction around a transversal axis (Y) and in a transversal direction around a longitudinal axis (X), and
- detection means (4) capable of detecting, in the manual mode, at least two different positions (M1-M8) of the speed controller lever obtained by pivoting the speed controller lever in at least said longitudinal direction from the neutral position and, in the sequential mode, at least two different positions (S1, S2) of the speed controller lever,
**characterized in that** the detection means (4) are capable of detecting, in the sequential mode, at least two different positions of the speed controller lever obtained by pivoting the speed controller lever in said transversal direction from the neutral position.

2. The speed controller according to claim 1, **characterized in that** it comprises a fist gate (5) mounted or capable of being mounted on said support casing,
said first gate comprising, for the passage of the speed controller lever, a transversal slot (51) and at least two longitudinal slots (52) opening into said transversal slot,
said transversal slot (51) being positioned and sized to guide the speed controller lever between the neutral position and said at least two positions (S1, S2) of the sequential mode and said longitudinal slots (52) being positioned and sized to guide the speed controller lever between the transversal slot and said at least two positions (M1-M8) of the manual mode.

3. The speed controller according to claim 2, **characterized in that** it further comprises a second removable gate (6) capable of being mounted on the support casing or, alternatively, on said first gate,
said second gate (6) comprising a transversal slot (61) for the passage of the speed controller lever,
the transversal slot (61) of said second gate being sized such that, the speed controller lever having in the sequential mode two different positions arranged on either side of the neutral position, said two different positions are reached by moving the speed controller lever towards the ends of said transversal slot.

4. The speed controller according to claim 3, **characterized in that** the length of the transversal slot (61) of the second gate is lower than the length of the transversal slot (51) of the first gate, said two different positions of the sequential mode being reached when the speed controller lever abuts against the ends of the transversal slot of the second gate.

5. The speed controller according to any one of claims 1 to 4, **characterized in that** the support casing comprises:
- a stationary set (11) to be fixedly mounted on a support such as a table, and
- a movable set (12) on which said speed controller lever (2) is hingeably mounted,
said movable set (12) being movable in rotation on said stationary set around a rotational axis (Z) substantially perpendicular to said transversal axis (Y) and said longitudinal axis (X).

6. The speed controller according to claim 5, **characterized in that** said stationary set (11) comprises a support plate (111) provided with a substantially circular opening (112) through which said movable set is mounted movable in rotation.

7. The speed controller according to claim 6, **characterized in that** said movable set comprises:
- a rim (120) movable in rotation around said rotational axis (Z) in the opening (112) of the support plate, the inner passage of said rim being traversed by the speed controller lever, and
- a support frame (121), fixed to the lower wall of said rim, the speed controller lever being pivotally hinged around said transversal axis and said longitudinal axis via articulation means (3).

8. The speed controller according to claim 7, **characterized in that** the support frame (121) is U shaped and comprises a base (124) and two parallel lateral branches (125) extending from said base and **in that** said articulation means (3) are mounted between the lateral branches of the support frame.

9. The speed controller according to claims 2 and 7, **characterized in that** the first gate (5) is mounted on the upper wall of the rim.

10. The speed controller according to any one of claims 5 to 9, **characterized in that** the support casing (1) comprises means (13) for rotationally locking said movable set with respect to the stationary set.

11. The speed controller according to claim 10, **characterized in that** the rotationally locking means (13) are capable of locking said movable set (12) in at least a manual position and a sequential position angularly shifted by 90° from each other.

12. The speed controller according to any one of claims 1 to 11, **characterized in that** said detection means (4) comprise a Hall-effect sensor (41) associated to a magnet (42),
said Hall-effect sensor (41) being mounted on a member among the lower free end of the speed controller lever and the support casing, said magnet being mounted opposite from said Hall-effect sensor on the other member.

13. The speed controller according to claims 5 and 12, **characterized in that** said Hall-effect sensor (41) is mounted on the movable set (12) and the magnet (42) is mounted opposite from said Hall-effect sensor on the lower end of the speed controller lever.

14. The speed controller according to any one of the preceding claims, **characterized in that** said support casing comprises fixing means (14), of U-bolt type or clamp type for example, for fixing said support casing to a piece of furniture such as a table or a desk.
